# EUROPÄISCHE PATENTSCHRIFT

(11) **EP 2 558 691 B1**
(45) Veröffentlichungstag und Bekanntmachung des Hinweises auf die Patenterteilung: **03.08.2016**
(21) Anmeldenummer: 11711784.6
(22) Anmeldetag: 30.03.2011
(51) Int. Cl.: F01N 3/022, F01N 3/035, F01N 3/20

(54) **REDUKTIONSKATALYTISCH BESCHICHTETES DIESELPARTIKELFILTER MIT VERBESSERTEN EIGENSCHAFTEN**
Diesel particulate filter coated with reduction catalyst with improved characteristics
Filtre à particules diesel revêtu d'un réducteur catalytique ayant des propriétés améliorées

(30) Priorität: 14.04.2010 EP 10003923
(43) Veröffentlichungstag der Anmeldung: 20.02.2013
(73) Patentinhaber: Umicore AG & Co. KG, 63457 Hanau-Wolfgang (DE)
(72) Erfinder: PFEIFER, Marcus, 42719 Solingen (DE); BASSO, Stephan, 57192 Florange (FR); DORNHAUS, Franz, Kobe 658-0063 (JP)
(86) Internationale Anmeldenummer: PCT/EP2011/001578
(87) Internationale Veröffentlichungsnummer: WO 2011/128026

(56) Entgegenhaltungen:
- EP-A1- 1 961 933
- EP-A2- 1 837 494
- WO-A1-2005/014146
- JP-A- 2009 106 913
- US-A1- 2004 076 565

## Beschreibung

Die Erfindung betrifft ein reduktionskatalytisch beschichtetes Dieselpartikelfilter mit verbesserten Eigenschaften, das sich zur Entfernung von Dieselruß und Stickoxiden aus dem Abgas von Dieselmotoren, insbesondere in Fahrzeugen, eignet.

Das Abgas von mit Dieselmotor betriebenen Kraftfahrzeugen enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen Feststoff-Teilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Gasförmige Rest-Kohlenwasserstoffe (HC) und Kohlenmonoxid (CO) werden typischerweise durch Überleiten des Abgases über einen konventionellen Dieseloxidationskatalysator entfernt. Zur Entfernung von Partikelemissionen werden Partikelfilter verwendet. Die Verminderung von Stickoxiden in mageren Dieselmotorenabgasen, d.h. aus Abgasen, die einen überstöchiometrischen Sauerstoffgehalt aufweisen, kann beispielsweise mit Hilfe des sogenannten "SCR-Verfahrens" erfolgen (SCR = Selective Catalytic Reduction). Beim SCR-Verfahren wird das zu entstickende Abgas nach Zugabe von Ammoniak oder einer zu Ammoniak zersetzlichen Verbindung als Reduktionsmittel über einen speziell ausgebildeten Katalysator ("SCR-Katalysator") geleitet, welcher die Komproportionierung der Stickoxide mit Ammoniak zu Stickstoff wirksam katalysiert.

Infolge der zunehmenden Verschärfung der gesetzlichen Emissionsvorgaben wird die systemische Kombination mehrerer Abgasreinigungsfunktionalitäten immer wichtiger. So wird zur Einhaltung künftiger Grenzwerte die Kombination aus innermotorischen Maßnahmen mit der katalytischen Abgasnachbehandlung nur einiger Abgaskomponenten voraussichtlich nicht mehr ausreichend sein. Insbesondere erscheint es erforderlich, zur Reinigung von Dieselabgasen sowohl Stickoxide als auch Partikel im Wege der katalytischen Abgasnachbehandlung zu entfernen.

Dazu sind im Stand der Technik verschiedene Lösungen vorgeschlagen worden. So offenbart beispielsweise EP 1 054 722 ein Abgasreinigungssystem zur Behandlung von NOₓ und Feststoffteilchen enthaltendem Verbrennungsabgas, das in Kombination und in dieser Reihenfolge einen Oxidationskatalysator, einen Partikelfilter und einen SCR-Katalysator umfasst. Der Oxidationskatalysator ist wirksam, um wenigstens einen Teil NO im NOₓ in NO₂ umzuwandeln und so den NO₂-Gehalt im Abgas zu erhöhen. Abströmseitig dazu befinden sich ein Feinstofffilter und ein SCR-Katalysator. Zwischen diesen beiden Aggregaten ist eine Einspritzvorrichtung für eine Reduktionsflüssigkeit angeordnet, über die dem Abgas vor Eintritt in den SCR-Katalysator des benötigte Reduktionsmittel zur Stickoxidreduktion aus einer vom Motor unabhängigen Quelle zugegeben wird.

Auch DE 103 23 607 offenbart eine Vorrichtung zur Reinigung der Stickoxide und Rußpartikel enthaltenden Abgase eines Verbrennungsmotors, mit einem Oxidationskatalysator, einem Partikelfilter und einem SCR-Katalysator. Diese Vorrichtung zeichnet sich dadurch aus, daß der SCR-Katalysator zusammen mit dem Partikelfilter zu einer baulichen Einheit zusammengefaßt ist, die nicht ohne Zerstörung des SCR-Katalysators und/oder des Partikelfilters in SCR-Katalysator und Partikelfilter getrennt werden kann.

EP 0 789 135 offenbart eine Abgasreinigungsvorrichtung umfassend Filterelemente zur Sammlung von Partikeln aus dem Abgas eines Dieselmotors, elektrische Drahtnetze, die anströmseitig zu den Filterelementen angeordnet sind, und poröse, keramische Elemente abströmseitig zu den Filterelementen. Die keramischen Elemente zeichnen sich dadurch aus, daß sie aus einer großen Anzahl von Zellen gebildet werden, die mit einem Granulat mit Brownmillerit-Struktur gefüllt sind und sich daher zur Verminderung von NOₓ im Abgas eignen.

DE 102 38 770 der Anmelderin beschreibt eine Vorrichtung zur Entfernung von Rußpartikeln aus dem Abgas eines Dieselmotors mit einem Wandflußfilter, welches wechselseitig verschlossene Strömungskanäle für das Abgas aufweist. Das in die Anströmkanäle eingeführte Abgas muß durch die porösen Kanalwände der Strömungskanäle in die Abströmkanäle fließen. In An- und/oder Abströmkanälen des Filters sind Zusatzstrukturen zur Abgasbehandlung vorgesehen. Die Kanalwände der Strömungskanäle sowie die Zusatzstrukturen sind mit einer Katalysatorschicht versehen. Die Filterfunktion der porösen Kanalwände und die katalytische Funktion der auf den Zusatzstrukturen befindlichen Katalysatorschicht sind weitgehend voneinander getrennt. Dabei ergänzen sich vorzugsweise die unterschiedlichen Funktionen, wodurch bei geringem Bauvolumen der erfindungsgemäßen Vorrichtung ein hoher Wirkungsgrad bei der Abgasbehandlung erzielt wird. Je nach gewünschter katalytischer Funktionalität kann das Filter unterschiedliche, katalytisch aktive Beschichtungen enthalten, so auch SCR-katalytisch aktive Beschichtungen.

EP 1 663 458 offenbart ein katalytisches Erzeugnis, das ein Wandflußfiltersubstrat und eine SCR-Katalysatorzusammensetzung umfaßt. Die SCR-Katalysatorzusammensetzung ist als Beschichtung appliziert, welche die Wände des Wandflußfiltersubstrats mit einer Konzentration von wenigstens 79,26 g/l durchdringt. Das Wandflußfiltersubstrat weist eine Wandporosität von wenigstens 50 % bei einer durchschnittlichen Porengröße von wenigstens 5 µm auf. Außerdem werden ein auf der Verwendung dieses Bauteils beruhendes Anwendungsverfahren und ein entsprechendes Abgasreinigungssystem offenbart, in der neben dem erwähnten katalytischen Erzeugnis auch ein vorgeschalteter Oxidationskatalysator und eine zwischen Oxidationskatalysator und katalytischem Erzeugnis angeordnete Einspritzvorrichtung für Reduktionsmittel aus einer vom Motor unabhängigen Quelle zum Einsatz kommen.

US 7,264,785 beschreibt ein Verfahren zur selektiven katalytischen Reduktion von Stickoxiden in Abgasen mager betriebener Fahrzeugmotoren unter Verwendung eines Abgasreinigungssystems. Dieses Abgasreinigungssystem umfaßt einen ersten SCR-Katalysator, der die selektive katalytische Reduktion von NOₓ mit einem Stickstoff-haltigen Reduktionsmittel wirksam katalysiert, und welcher mehr als 1 Meter abströmseitig zum Abgaskrümmer oder zum Turbinenaustritt des Motors angeordnet ist. Das System umfaßt ein Partikelfilter in Unterbodenposition, der einen zweiten SCR-Katalysator enthält.

2009106913 offenbart einen Dieselpartikelfilter mit einer ersten katalytischen Beschichtung und einer zweiten in die Wand eingebrachten katalytischen SCR-Beschichtung.

Die Funktionalisierung keramischer Wandflußfiltersubstrate erscheint zunehmend als eine geeignete Alternative zur Serienanordnung verschiedener katalytischer Abgasreinigungsaggregate, wenn zugleich wirksame Partikelentfernung und Verminderung gasförmiger Abgasbestandteile sichergestellt werden müssen. Allerdings zeigen herkömmliche, mit SCR-Katalysatorbeschichtungen versehene Filter häufig ein exorbitantes Ansteigen des Staudruckes während der Rußbeladungsphase und weisen ein schlechtes Staudruckverhalten in mit Ruß beladenem Zustand auf. Grundsätzlich ist ein hoher Staudruck ebenso wie ein schneller Anstieg des Staudruckes bei Dieselpartikelfiltern, die in Kraftfahrzeugen eingesetzt werden, unerwünscht, da dieser im Betrieb dazu führt, daß Motorleistung aufgewendet werden muß, um Abgas durch die Abgasreinigungsanlage zu "drückern". Diese Motorleistung geht für den Antrieb des Fahrzeugs verloren. Die optimale Ausnutzung der Motorleistung für den Antrieb ist jedoch gleichbedeutend mit einer Erhöhung der effektiven Kraftstoffausnutzung und bedeutet Kraftstoffverbrauchsvorteile und somit auch verminderte CO₂-Emissionen des Fahrzeugs. Ein schlechtes Staudruckverhalten hat des Weiteren zur Folge, daß das Filter häufiger durch aktiven Rußabbrand reaktiviert werden muß. Weiterhin weisen herkömmliche reduktionskatalytisch beschichtete Filter im Vergleich zu unbeschichteten oder oxidationskatalytisch beschichteten Ausführungsformen ein signifikant verschlechtertes, passives Regenerationsverhalten auf: Im Vergleich zum unbeschichteten Filter ist die Rußmenge, die durch NO₂ während des Rußbeladungsbetriebes in situ aufoxidiert und so abgebrannt wird, erheblich kleiner. Dies führt ebenfalls dazu, daß das herkömmliche reduktionskatalytisch beschichtete Filter häufiger aktiv, d.h. durch gezieltes Aufheizen über die Rußzündtemperatur regeneriert werden muß. Ferner wird an reduktionskatalytisch aktiv beschichteten Filtern nicht selten eine gegenüber anderen katalytisch beschichteten Filtern verminderte Filtrationseffizienz beobachtet. Und schließlich zeigt die reduktionskatalytische Beschichtung im Vergleich zu herkömmlichen SCR-Katalysatoren bezüglich der NOₓ-Konvertierung eine verschlechterte Dauerstabilität, da die häufigeren aktiven Partikelfilterregenerationen eine erhebliche thermische Belastung für die katalytisch aktive Beschichtung darstellen und zu einer beschleunigten thermischen Deaktivierung der katalytisch aktiven Zentren führen.

Der vorliegenden Erfindung lag die Aufgabe zugrunde, ein mit einer SCR-katalytisch aktiven Beschichtung funktionalisiertes Dieselpartikelfilter zur Verfügung zu stellen, das die vorstehend genannten Nachteile nicht aufweist.

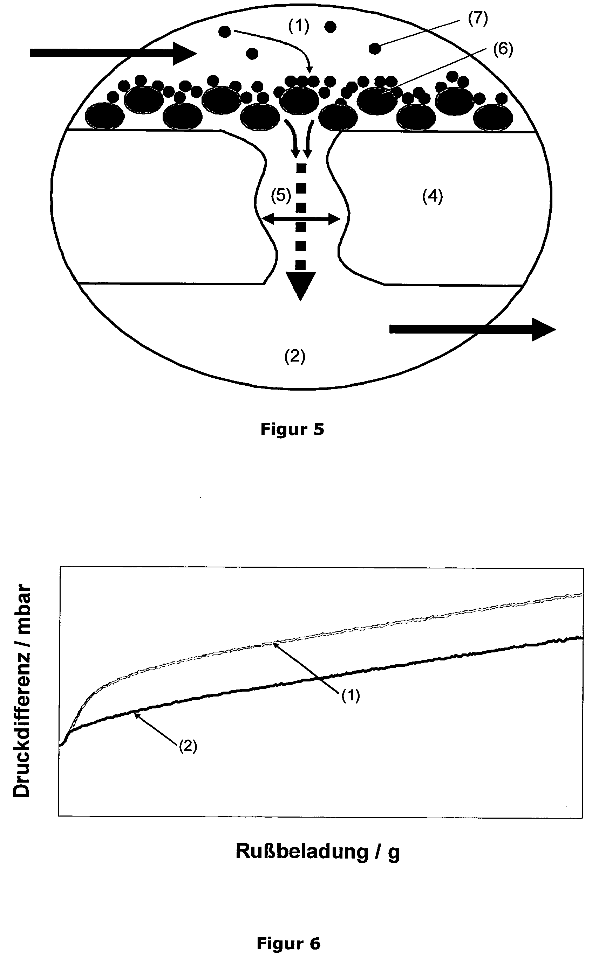

Diese Aufgabe wird gelöst durch ein Dieselpartikelfilter enthaltend ein keramisches Wandflußfiltersubstrat und zwei Beschichtungen. Die erste Beschichtung ist aus hochschmelzendem Material und in den Anströmkanälen aufgebracht. Sie ist so beschaffen, daß sie die die Anströmkanäle und Abströmkanäle verbindenden Poren in der Wand anströmseitig für Rußpartikel verschließt, ohne dabei den Durchtritt der gasförmigen Abgasbestandteile zu verhindern [Figur 5]. Die zweite Beschichtung ist in die Wand zwischen Anströmkanälen und Abströmkanälen eingebracht und so beschaffen, daß sie die selektive Reduktion von Stickoxiden mit einem Reduktionsmittel wirksam katalysiert, d.h. diese zweite Beschichtung ist eine SCR-katalytisch aktive Beschichtung.

Das Dieselpartikelfilter ist dadurch gekennzeichnet, dass die erste Beschichtung mehrheitlich ein oder mehrere hochschmelzende Oxide enthält, deren Partikelgrößen den Porengrößen in der Wand des Wandflußfiltersubstrates derart angepasst wird, daß der d₅₀-Wert der Partikelgrößenverteilung der Oxide gleich oder größer dem d₅-Wert der Porengrößenverteilung des Wandflußfiltersubstrates ist, wobei zugleich der d₉₀-Wert der Partikelgrößenverteilung der Oxide gleich oder größer dem d₉₅-Wert der Porengrößenverteilung des Wandflußfiltersubstrates ist. Dabei ist unter dem d₅₀-Wert bzw. dem d₉₀-Wert der Partikelgrößenverteilung der Oxide zu verstehen, daß 50 % bzw. 90 % des Gesamtvolumens der Oxide nur solche Partikel enthält, deren Durchmesser kleiner oder gleich dem als d₅₀ bzw. d₉₀ angegebenen Wert ist. Unter d₅-Wert bzw. dem d₉₅-Wert der Porengrößenverteilung des Wandflußfiltersubstrates ist zu verstehen, daß 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist.

Zur Funktionalisierung von Wandflußfiltersubstraten mit SCR-Katalysatoren müssen hochporöse Filterkörper mit größeren Porenduchmessern verwendet werden, um hinreichende Mengen der reduktionskatalytisch aktiven Beschichtung in das Substrat einbringen zu können, ohne daß der Staudruck des Abgases über dem unberußten Bauteil zu groß wird. Diese höhere Substratporosität ist, wie Untersuchungen der Erfinder zeigen, ursächlich für die an herkömmlichen reduktionskatalytisch beschichteten Filtern nicht selten zu beobachtende verminderte Filtrationseffizienz. Des Weiteren kommt es zu einer vermehrten In-Wand-Tiefenfiltration, die die dramatische Verschlechterung des Staudruckverhaltens bei herkömmlichen reduktionskatalytisch beschichteten Filtern während der Rußbeladungsphase bedingt.

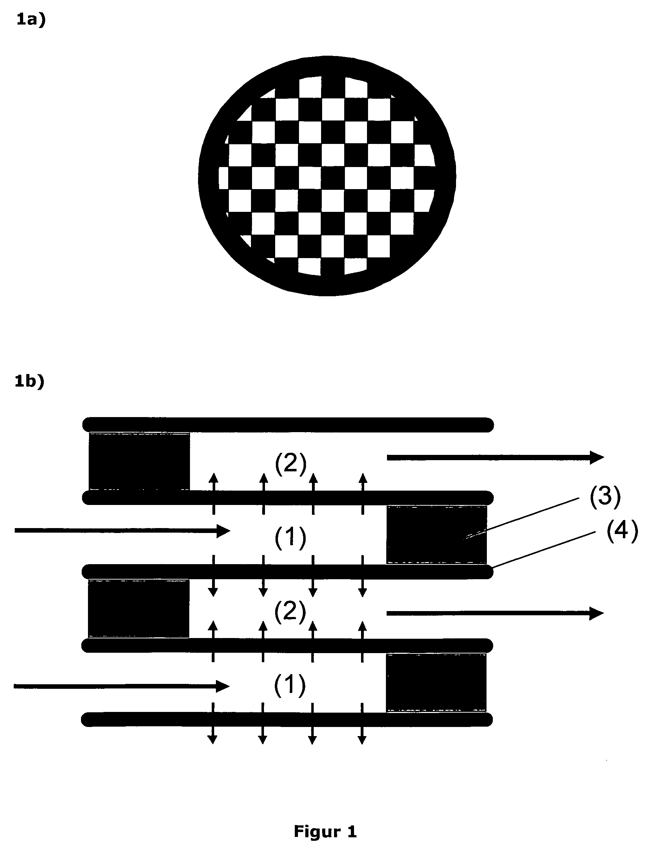

Wandflußfiltersubstrate sind keramische Wabenkörper mit wechselseitig gasdicht verschlossenen An- und Abströmkanälen. Figur 1 zeigt schematisch ein solches Wandflußfiltersubstrat. Das in die Anströmkanäle (1) einströmende Partikel-haltige Abgas wird durch den auf der Austrittsseite befindlichen gasdichten Verschlußstopfen (3) zum Durchtritt durch die poröse Wand (4) gezwungen und tritt aus den auf der Anströmseite verschlossenen Abströmkanälen (2) aus dem Wandflußfiltersubstrat wieder aus. Dabei wird Dieselruß aus dem Abgas herausgefiltert.

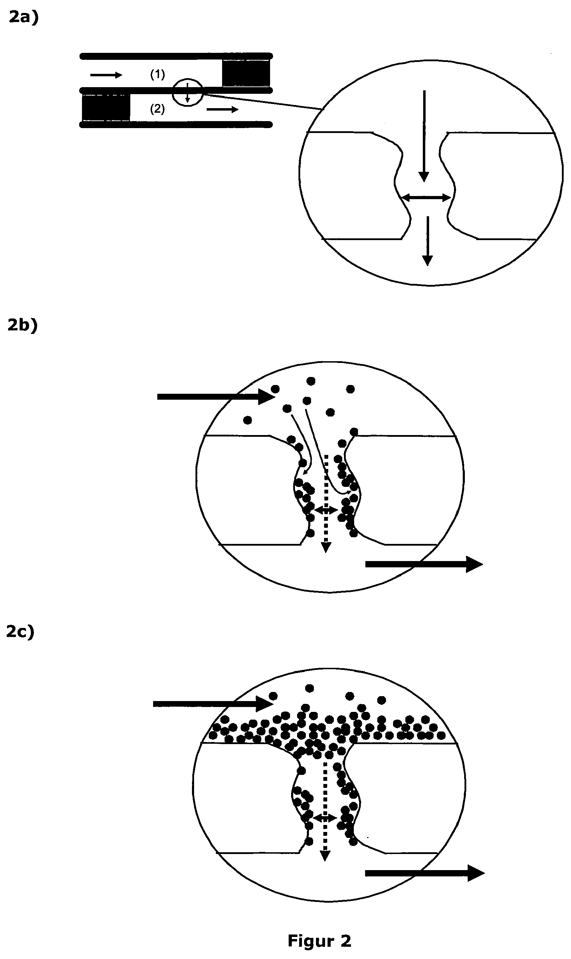

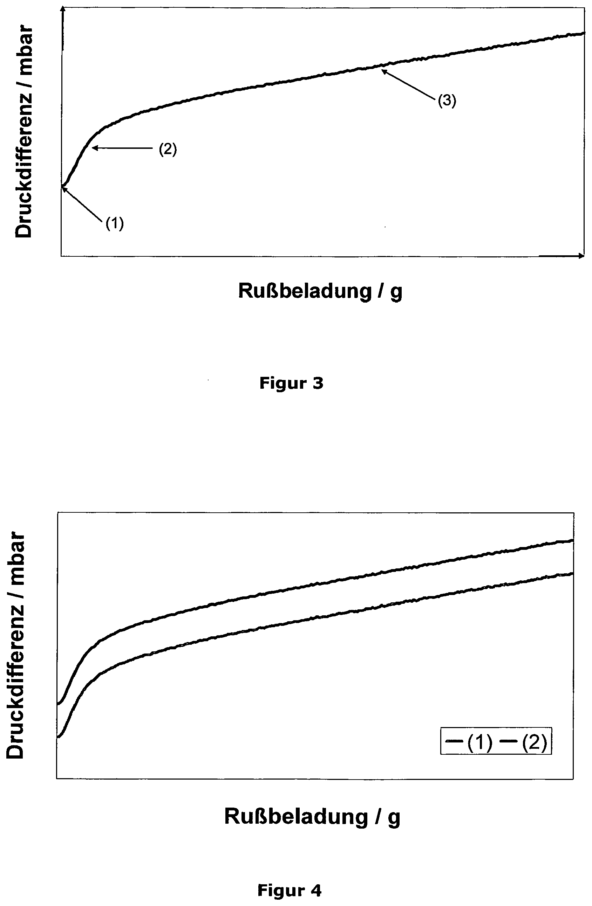

Die Rußfiltration im Wandflußfiltersubstrat beim Durchtritt durch die Wand kann als zweistufiger Vorgang beschrieben werden. In einer ersten Phase, der sogenannten "Tiefenfiltrationsphase" bleiben beim Durchtritt des partikelhaltigen Abgases durch die Wand Rußpartikel in den Poren der Wand haften [Figur 2b]. Dies führt zu einer Verkleinerung des Porendurchmessers in der Wand und infolgedessen zu einem sprunghaften Anstieg des Staudruckes über dem Wandflußfiltersubstrat. Sobald der Porendurchmesser zu stark verringert ist, um mittleren und größeren Rußteilchen den Eintritt in die Pore zu gestatten, setzt eine Filterkuchenbildung [Figur 2c] im gesamten Anströmkanal ein. Während des Aufbaus des Filterkuchens steigt der Staudruck über dem Wandflußfiltersubstrat nur noch linear mit der gefilterten Menge Dieselruß. Figur 3 zeigt schematisch die Entwicklung des Staudruckes über dem Wandflußfilter ausgehend vom rußfreien Filter als Funktion der aufgenommenen Rußmenge. (1) zeigt den Staudruck des unberußten Filters, (2) den Anstieg während der Tiefenfiltrationsphase und (3) die lineare Staudruckzunahme während der Filterkuchenbildungsphase.

Der vorstehend beschriebene zweistufige Vorgang der Rußfiltration im Wandflußfiltersubstrat ist allgemein gültig; er wird bei nicht beschichteten Wandflußfiltersubstraten ebenso beobachtet, wie bei Wandflußfiltersubstraten mit katalytisch aktiver Beschichtung, beispielsweise mit einer reduktionskatalytisch aktiven Beschichtung gemäß EP 1 663 458. Die Ausgangskonfiguration des Wandflußfilters beeinflußt vornehmlich den Ausgangsstaudruck des Bauteils in unberußtem Zustand, wie Figur 4 zu entnehmen ist. Herkömmliche katalytisch beschichtete Wandflußfiltersubstrate (2) zeigen in unberußtem Zustand einen deutlich höheren Ausgangsstaudruck als unbeschichtete Wandflußfiltersubstrate (1); der allgemeine Verlauf der Staudruckkurve mit zunehmender Rußbeladung aber ist mit dem allgemeinen Verlauf der Staudruckkurve des unbeschichteten Substrats (1) meist vergleichbar. Bei reduktionskatalytisch beschichteten Wandflußfiltersubstraten nach dem Stand der Technik ist die In-Wand-Tiefenfiltration, wie vorstehend erläutert, jedoch stärker ausgeprägt, was einen steileren Anstieg der Staudruckkurve in der Tiefenfiltrationskurve bedingt.

Die erfindungsgemäße Ausführung der ersten Beschichtung führt dazu, daß die Tiefenfiltration deutlich vermindert und somit der während der Tiefenfiltrationsphase zu beobachtende Staudruckanstieg signifikant verringert wird. Figur 6 zeigt schematisch den Effekt, der durch die aufgebrachte Beschichtung erzielt wird.

Das erfindungsgemäße Dieselpartikelfilter enthält eine zweite Beschichtung, die in die Wand zwischen Anströmkanälen und Abströmkanälen eingebracht und so beschaffen ist, daß sie die selektive katalytische Reduktion von Stickoxiden mit einem Reduktionsmittel wirksam katalysiert. Diese Beschichtung enthält eine oder mehrere SCR-katalytisch aktive Komponenten. Diese sind bevorzugt ausgewählt aus der Gruppe bestehend aus:
(a) mit Eisen und/oder Kupfer ausgetauschte Zeolithverbindungen ausgewählt aus MOR, USY, ZSM-5, ZSM-20, beta-Zeolith, CHA, FER oder Mischungen davon; oder
(b) mit Eisen und/oder Kupfer ausgetauschte zeolithähnliche Verbindungen ausgewählt aus SAPO-34 oder ALPO-34 oder Mischungen davon; oder
(c) Vanadiumoxid, Titanoxid, Wolframoxid, Molybdanöxid, Ceroxid, Zirkonoxid, Nioboxid, Eisenoxid, Manganoxid, oder Mischungen oder Mischoxide davon; oder
(d) Mischungen aus (a) und/oder (b) und/oder (c).

Aus der genannten Teilmenge (a) werden besonders bevorzugt MOR, ZSM-5, beta-Zeolith, CHA und FER und ganz besonders bevorzugt beta-Zeolith, CHA und FER. Aus der genannten Teilmenge (b) wird SAPO-34 ganz besonders bevorzugt. Aus der genannten Teilmenge (c) werden besonders bevorzugt Mischoxide aus Ceroxid, Zirkonoxid, gegebenenfalls Wolframoxid, gegebenenfalls Eisenoxid und gegebenenfalls Nioboxid.

Bevorzugte Ausgestaltungen der erfindungsgemäßen Bauteile enthalten Wandflußfiltersubstrate, die aus Siliciumcarbid, Cordierit oder Aluminiumtitanat gefertigt sind und die in den Wänden zwischen An- und Abströmkanälen Poren mit einem mittleren Durchmesser zwischen 5 und 50 µm, besonders bevorzugt zwischen 10 und 25 µm, aufweisen.

Die beiden im erfindungsgemäßen Bauteil vorhandenen Beschichtungen, von denen die erste Beschichtung (nachfolgend als "Overcoat" bezeichnet) dazu dient, die Tiefenfiltration zu vermindern, während die zweite Beschichtung (nachfolgend als "SCR-Beschichtung" bezeichnet) dazu dient, die selektive katalytische Reduktion von Stickoxiden wirksam zu katalysieren, wirken synergistisch zusammen. Durch den Overcoat wird gemäß seiner Bestimmung sowohl die In-Wand-Tiefenfiltration unterdrückt, als auch die Filtrationseffizienz des Filters erhöht. Durch die SCR-Beschichtung werden gemäß ihrer Bestimmung Stickoxide im das Filter durchdringenden Abgas signifikant vermindert. Durch das Zusammenwirken der beiden Beschichtungen erfolgt darüberhinaus eine Entkoppelung zweier Reaktionen [(1) und (2)], deren Konkurrenz das passive Regenerationsverhalten herkömmlicher reduktionskatalytisch beschichteter Filter erheblich negativ beeinflusst: Der oxidativen Umsetzung von Rußpartikeln mit NO₂ während der Regenerationsreaktion (1) und der sogenannten "SCR-Reaktion", d.h. der Komproportionierung von NO und NO₂ mit Ammoniak (2), die, wie allgemein bekannt, am schnellsten abläuft, wenn NO und NO₂ etwa im Verhältnis 1 : 1 zueinander vorliegen:

(1) C+NO₂ → CO₂ + 2 NO

(2) 2 NO + 2 NO₂ → 4 N₂ + 6 H₂O

Im Zusammenwirken der beiden im erfindungsgemäßen Bauteil vorliegenden Schichten werden die Funktionalitäten getrennt und die Konkurrenz zwischen den beiden Reaktionen aufgehoben. Somit kann Ruß ohne Störung der Entstickungseffizienz der SCR-Beschichtung erheblich effektiver mit NO₂ umgesetzt und das passive Regenerationsverhalten des Filters wieder deutlich verbessert werden. Das Filter muß seltener aktiven Regenerationszyklen unterworfen werden. Infolgedessen sinkt die thermische Belastung der SCR-Beschichtung, so daß sich die Dauerstabilität des Bauteils bezüglich der NOₓ-Konvertierung und somit die über den Zyklus zu betrachtende effektive Entstickungswirkung erhöht.

Bei der Materialwahl für die erste Beschichtung, welche die die Anströmkanäle und Abströmkanäle verbindenden Poren in der Wand anströmseitig für Rußpartikel verschließt, ohne dabei den Durchtritt der gasförmigen Abgasbestandteile zu verhindern, ist darauf zu achten, daß die Materialien, die im Overcoat eingesetzt werden, keine oxidationskatalytisch aktive Wirkung gegenüber Ammoniak aufweisen dürfen, damit das in den Filter gelangende Ammoniak vollständig der SCR-Reaktion zur Verfügung steht. Vorteilhafterweise enthält der Overcoat somit kein Platin. Der Overcoat kann aber gegebenenfalls Palladium enthalten, das keine oxidationskatalytisch aktive Wirkung gegenüber Ammoniak aufweist.

In einer Ausführungsform der vorliegenden Erfindung sind die im Overcoat verwendeten Materialien nicht reduktionskatalytisch aktiv, insbesondere nicht SCR-aktiv. In einer alternativen Ausführungsform der vorliegenden Erfindung sind die im Overcoat verwendeten Materialien reduktionskatalytisch aktiv, insbesondere SCR-aktiv. In diesem Fall ist es insbesondere bevorzugt, wenn sich die SCR-aktiven Beschichtungen der ersten und der zweiten Schicht unterscheiden, d.h. nicht identisch sind.

In einer bevorzugten Ausführungsform haben die im Overcoat verwendeten Materialien keine NOₓ-speichernde Wirkung.

Ein bevorzugtes erfindungsgemäßes Partikelfilter umfasst einen Overcoat, der mehrheitlich ein oder mehrere hochschmelzende Oxide enthält. Damit der Overcoat so beschaffen ist, daß die die Anströmkanäle und Abströmkanäle verbindenden Poren für Rußpartikel verschlossen werden, ohne dabei den Durchtritt der gasförmigen Abgasbestandteile zu verhindern, müssen die für den Overcoat verwendeten Materialien auch bezüglich der Partikelbeschaffenheit sorgfältig ausgewählt werden. Insbesondere müssen die zu verwendenden Oxide eine Partikelgrößenverteilung aufweisen, die der Porengrößenverteilung in der Wand des Substrats angepaßt ist. Die bestimmungsgemäße Funktion des Overcoats wird dann erfüllt, wenn der d₅₀-Wert der Partikelgrößenverteilung der Oxide gleich oder größer dem d₅-Wert der Porengrößenverteilung des Wandflußfiltersubstrates, und zugleich der d₉₀-Wert der Partikelgrößenverteilung der Oxide gleich oder größer dem d₉₅-Wert der Porengrößenverteilung des Wandflußfiltersubstrates ist. (Was unter den entsprechenden dₓ-Werten der Partikelgrößenverteilung einerseits, und der Porengrößenverteilung andererseits zu verstehen ist, wurde vorstehend bereits erläutert.) Bevorzugt werden Oxide eingesetzt, deren Partikelgrößenverteilung einen d₅₀-Wert größer oder gleich 5 µm bei einem d₉₀-Wert größer oder gleich 20 µm aufweist. Besonders bevorzugt sind Oxide mit einem d₅₀-Wert zwischen 10 und 15 µm und einem d₉₀-Wert, der zwischen 25 und 40 µm liegt. Vorzugsweise werden Oxide eingesetzt, die einen d₅₀-Wert von 10 bis 15 µm und einen d₉₀-Wert von 30 bis 35 µm aufweisen. Letztere zeichnen sich neben einer optimierten Funktionalität hinsichtlich der Verringerung der Tiefenfiltration auch durch eine besonders gute Haftung auf dem Wandflußfiltersubstrat aus.

Bei einigen Oxiden lassen sich die geforderten Partikelgrößenbereiche gut durch gezieltes Vormahlen des Oxids vor Einbringen in das Wandflußfiltersubstrat einstellen. Um diesen Vorteil umfassend nutzen zu können und weiterhin den Anforderungen an die Reaktionseigenschaften des Overcoats gerecht zu werden, werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, und Mischungen davon. Besonders bevorzugt sind Aluminiumoxid oder Selten-Erdmetall-stabilisiertes Aluminiumoxid.

Um eine möglichst optimale Funktionsweise des oxidischen Overcoats bei zugleich möglichst geringem Einfluß der die Tiefenfiltration vermindernden Beschichtung auf den Ausgangsstaudruck zu gewährleisten, wird der Overcoat bevorzugt mit einer Schichtdicke von 10 bis 150 µm, besonders bevorzugt 20 bis 100 µm in den Anströmkanälen des Wandflußfiltersubstrates aufgebracht. Für die vorstehend genannte Auswahl an möglichen oxidischen Overcoat-Materialien lassen sich entsprechende Schichtdicken bei einer Beladung von 1 bis 50 g/L Feststoff, bezogen auf das Volumen des Wandflußfiltersubstrates, darstellen. Besonders bevorzugt sind Beladungen von 1 bis 20 g/L Feststoff, ganz besonders vorteilhaft Schichtdicken von 1 bis 10 g/L Feststoff, bezogen auf das Volumen des Wandflußfiltersubstrates.

Zur Herstellung eines erfindungsgemäßen Dieselpartikelfilters mit oxidischem Overcoat kann beispielsweise ein herkömmliches funktionalisiertes Dieselpartikelfilter, das eine SCR-katalytisch aktive Beschichtung in der Wand zwischen An- und Abströmkanälen aufweist, als Grundbauteil verwendet werden. Darauf wird dann der die Tiefenfiltration vermindernde Overcoat aufgebracht. Zur Herstellung des Overcoats wird ein geeignetes Oxid ausgewählt und in einer Menge Wasser suspendiert, die mindestens zweimal so groß ist, wie das Porenvolumen des ausgewählten Oxids. Gegebenenfalls wird die so erhaltene wässrige Suspension des Oxids mit Hilfe einer Dyno-Mühle bis zur Einstellung der geforderten Partikelgrößenverteilung vermahlen. Der Zusatz von Hilfstoffen zur Erhöhung der Sedimentationsstabilität der Suspension in diesem Stadium des Herstellprozesses ist für die Funktion des herzustellenden Overcoats unschädlich, sofern sich diese Hilfsstoffe bei der Kalzination im letzten Präparationsschritt vollständig thermisch entfernen lassen. Auch die Beimischung von haftvermittelnden Agentien wie Kieselsäure und anderen anorganischen Solen ist unschädlich, sofern ihre oxidischen Kalzinationsrückstände im Bauteil weder ammoniakoxidationskatalytisch aktiv noch SCR-katalytisch aktiv sind. Die Suspension wird nach dem gegebenenfalls erfolgten Einstellen der Partikelgrößenverteilung durch Vermahlen in die Anströmkanäle des zu beschichtenden Wandflußfiltersubstrates eingepumpt. Nach vollständigem Füllen der Anströmkanäle mit der Suspension wird die überstehende Suspension aus dem Wandflußfiltersubstrat wieder herausgesaugt. Dabei ist die Saugleistung so zu wählen, daß am Ende des Vorgangs die vorgegebene Beladungsmenge als Feststoff im Anströmkanal verbleibt. Das so hergestellte erfindungsgemäße Wandflußfiltersubstrat wird bei 80 bis 180°C im Heißluftstrom getrocknet und anschließend bei 250 bis 600°C, bevorzugt bei 300 bis 500°C, kalziniert. Es ist nach Kalzination ohne weitere Behandlung einsatzfertig.

Ein weiteres bevorzugtes erfindungsgemäßes Partikelfilter umfasst einen Overcoat, der mehrheitlich ein hochschmelzendes Fasermaterial enthält. Das Fasermaterial muß so beschaffen sein, daß es sich in den Anströmkanälen wie eine gasdurchlässige Matte über die Öffnungen der Poren in der Wand legt und somit das Eindringen auch feinster Rußpartikel in die Poren signifikant erschwert bzw. im günstigsten Falle weitestgehend verhindert. Damit dies gewährleistet ist, ist das Fasermaterial so auszuwählen, daß die mittlere Länge der Fasern zwischen 50 und 250 µm beträgt und der mittlere massenbezogene Durchmesser der Fasern gleich oder kleiner dem d₅₀-Wert der Porengrößenverteilung des Wandflußfiltersubstrates ist. Unter dem d₅₀-Wert der Porengrößenverteilung des Wandflußfiltersubstrates ist zu verstehen, daß 50 % des gesamten, durch Quecksilberporosimetrie bestimmbaren Porenvolumens gebildet werden durch Poren, deren Durchmesser kleiner oder gleich dem als d₅₀ angegebenen Wert ist. Bevorzugt werden Fasern mit einer mittleren Faserlänge von 100 bis 150 µm und einem mittleren massenbeszogenen Durchmesser der Faser von 5 bis 15 µm eingesetzt.

Wie auch die vorstehend beschriebenen, alternativ zu verwendenden Oxide darf das Fasermaterial weder oxidationskatalytische Aktivität gegenüber Ammoniak zeigen noch reduktionskatalytisch, insbesondere SCR-katalytisch aktiv sein. Desweiteren muß das Fasermaterial so temperaturbeständig sein, daß es den normalen Betriebs- und Regenerationstemperaturen des Dieselpartikelfilters im Bereich von 100 bis 900°C standhält, d.h. die Schmelztemperatur der Fasern muß oberhalb von 900°C liegen. Viele Fasermaterialien, die diese technischen Anforderungen erfüllen, wie beispielsweise Asbest, Mullit, Mineralwolle mit kleinen Faserdurchmessern und Aluminiumoxidfasern, setzen carcinogene Faserstäube frei und/oder zeigen gegenüber Stickoxiden in Gegenwart von Ammoniak reduktionskatalytische Aktivität. Das Fasermaterial, das im erfindungsgemäßen Dieselpartikelfilter zum Einsatz kommt, ist daher bevorzugt auszuwählen aus der Gruppe der gesundheitlich unbedenklichen Materialien bestehend aus Steinwolle, Natursteinfaser und Mineralwolle mit Faserdurchmessern größer 5 µm. Besonders bevorzugt werden Natursteinfasern eingesetzt. Solche Natursteinfasern bestehen überwiegend aus Siliziumdioxid, Aluminiumoxid, Calcium- und Magnesiumoxid. Sie können außerdem Eisenoxid und Alkalioxide, insbesondere Kaliumoxid und Natriumoxid, enthalten. Gewonnen werden geeignete Natursteinfasern beispielsweise aus aufgeschmolzenem Basalt. Sie sind als Dämm-Materialien im Baustoffhandel in verschiedenen Formen erhältlich.

Durch die Verwendung von hochschmelzendem Fasermaterial zur Herstellung des Overcoats lassen sich die Overcoat-Schichtdicken im erfindungsgemäßen Bauteil auf 1 bis 50 µm verringern. Bevorzugt hat ein Overcoat aus hochschmelzendem Fasermaterial eine Schichtdicke von 3 bis 30 µm. Diese lassen sich mit einer Overcoat-Beladung von 1 bis 30 g/L Feststoff, bezogen auf das Volumen des Wandflußfiltersubstrates, darstellen. Besonders bevorzugt sind Beladungen von 2 bis 15 g/L Feststoff, ganz besonders vorteilhaft Beladungsmengen von 2 bis 5 g/L Feststoff, bezogen auf das Volumen des Wandflußfiltersubstrates.

Die Herstellung eines erfindungsgemäßen Dieselpartikelfilters mit hochschmelzendem Fasermaterial enthaltendem Overcoat kann ebenfalls unter Verwendung eines herkömmlichen Wandflußfiltersubstrates mit SCR-katalytisch aktiver Beschichtung in der Wand erfolgen, durch Suspension des Fasermaterials in einer ausreichenden Menge Wasser und Durchpumpen der Suspension von der Anströmseite durch das Wandflußfiltersubstrat. Dabei muß die in das Substrat eingepumpte Suspensionsmenge so gewählt sein, daß die darin enthaltende Fasermaterialmenge der aufzubringenden Feststoffbeladung entspricht. Zum Durchpumpen des wässrigen Suspensionsanteils durch die Wand ist ein entsprechend hoher Pumpdruck notwendig. Gegebenenfalls können der Beschichtungssuspension geringe Mengen an haftvermittelnden Hilfsstoffen zugesetzt werden, sofern deren Korngrößen groß genug sind, daß sie in den Faserzwischenräumen verbleiben und nicht in die Poren zwischen An- und Abströmkanälen eindringen. Gegebenenfalls kommen als haftvermittelnde Hilfstoffe auch Kieselsäure und andere anorganische Sole in Betracht, sofern ihre oxidischen Kalzinationsrückstände im Bauteil weder ammoniakoxidationskatalytisch aktiv noch SCR-katalytisch aktiv sind. Nach Durchpumpen der Beschichtungssuspension wird das Wandflußfiltersubstrat bei 80 bis 180°C im Heißluftstrom getrocknet und anschließend bei 250 bis 600°C, bevorzugt bei 300 bis 500°C, kalziniert. Es ist nach Kälzination ohne weitere Behandlung einsatzfertig.

Im Vergleich zur Herstellung eines erfindungsgemäßen Dieselpartikelfilters mit oxidischem Overcoat darf die Beschichtungssuspension bei der Herstellung eines erfindungsgemäßen Dieselpartikelfilters mit Faser-Overcoat nicht aus den Anströmkanälen des Wandflußfiltersubstrates abgesaugt werden, da die Saugbelastung ein Aufreißen der eingebrachten Fasermatte und somit ein Freilegen von Poren zur Folge hätte. Die derart freigelegten Poren wären weiterhin zugänglich für Rußpartikel; infolgedessen würde ein erhöhtes Maß an Tiefenfiltration, eine Verschlechterung des aktiven und passiven Regenerationsverhaltens und eine mindestens teilweise Verschlechterung der Dauerstabilität des resultierenden Bauteils bezüglich der NOₓ-Konvertierungsaktivität beobachtet.

In einer weiteren bevorzugten Ausführungsform kann der ersten Beschichtung, die mehrheitlich ein oder mehrere hochschmelzende Oxide enthält (-also dem oxidischen Overcoat-), durch Beimischung oder Imprägnierung Palladium als oxidationskatalytisch aktive Komponente beigefügt werden. Palladium zeichnet sich dadurch aus, daß es zwar oxidationskatalytisch aktive Wirkung gegenüber Rest-Kohlenwasserstoffen (HC) und Kohlenmonoxid (CO) zeigt, nicht jedoch gegenüber Ammoniak. Daher wird das synergistische Zusammenwirken von Overcoat und SCR-Beschichtung durch das Palladium nicht beeinträchtigt. Zusätzlich erhält ein solches erfindungsgemäßes Filter jedoch die Fähigkeit, HC und CO, die verstärkt als Sekundäremission während der aktiven Regeneration entstehen, zu unschädlichem CO₂ aufzuoxidieren und somit direkt zu entfernen.

Das erfindungsgemäße Filter eignet sich insbesondere zur Verminderung von Stickoxiden und Partikeln aus dem Abgas von Dieselmotoren. In der besonderen Pd-haltigen Ausführungsform hat das erfindungsgemäße Filter auch HC und CO vermindernde Wirkung und eignet sich deshalb zur Reinigung der Abgase von Dieselmotoren.

Die Erfindung wird nachfolgend anhand einiger Figuren und eines Ausführungsbeispiels näher erläutert. Es zeigen:
- **Figur 1:**: Schematische Darstellung eines Wandflußfiltersubstrates; Figurenteil (1a) zeigt die Aufsicht auf die Stirnfläche mit wechselseitig (- in weiß dargestellt -) offenen und (- in schwarz dargestellt -) gasdicht verschlossenen Kanälen; Figurenteil (1b) zeigt einen Ausschnitt aus dem Wandflußfiltersubstrat als Prinzipskizze, die die Funktionsweise verdeutlicht; darin bezeichnen: die Pfeile die Strömungsrichtung des Abgases;:
(1) Anströmkanal;
(2) Abströmkanal;
(3) gasdichter Verschlußstopfen;
(4) poröse, d.h. gasdurchlässige Wand.
- **Figur 2:**: Schematische Darstellung des Rußfiltrationsprozesses in einem Wandflußfiltersubstrat; darin bezeichnen: die Pfeile die Strömungsrichtung des Abgases;:
(1) Anströmkanal;
(2) Abströmkanal;
Figurenteil (2a) zeigt einen vergrößerten Ausschnitt aus der Wand des Wandflußfiltersubstrates mit Pore; Figurenteil (2b) zeigt schematisch den Ablauf der Tiefenfiltration; Figurenteil (2c) zeigt schematisch den Ablauf der Filterkuchenbildung;
- **Figur 3:**: Schematische Darstellung der Entwicklung des Staudruckes über einem Wandflußfiltersubstrat als Funktion der aufgenommenen Rußmenge; darin bezeichnet
(1) den Anfangsstaudruck in rußfreiem Zustand,
(2) den Staudruckanstieg während der Tiefenfiltrationsphase;
(3) den Staudruckanstieg während der Filterkuchenbildungsphase
- **Figur 4:**: Schematische Darstellung der Entwicklung des Staudruckes über unterschiedlichen Wandflußfiltersubstraten als Funktion der aufgenommenen Rußmenge; darin bezeichnet
(1) die Entwicklung des Staudruckes über einem unbeschichteten Wandflußfiltersubstrat,
(2) die Entwicklung des Staudruckes über einem Wandflußfiltersubstrat mit katalytischer Beschichtung oder Rußzündbeschichtung
- **Figur 5:**: Schematische Darstellung eines Ausschnitts eines erfindungsgemäßen Dieselpartikelfilters enthaltend ein keramisches Wandflußfiltersubstrat und eine in den Anströmkanälen (1) aufgebrachte Beschichtung (6) aus hochschmelzendem Material, die so beschaffen ist, daß sie die die Anströmkanäle (1) und die Abströmkanäle (2) verbindenden Poren (5) in der Wand (4) anströmseitig für Rußpartikel (7) verschließt, ohne dabei den Durchtritt der gasförmigen Abgasbestandteile zu verhindern. (Wegen der besseren Übersichtlichkeit der Zeichnung, ist die in der Wand befindliche, SCR-katalytisch aktive Beschichtung nicht dargestellt.)
- **Figur 6:**: Schematische Darstellung der Entwicklung des Staudruckes
(1) über einem Wandflußfiltersubstrat nach dem Stand der Technik ohne eine die Tiefenfiltration vermindernde Beschichtung;
(2) über einem erfindungsgemäßen Wandflußfiltersubstrat mit einer die Tiefenfiltration vermindernden Beschichtung.

### Ausführungsbeispiel

Ein keramisches Wandflußfiltersubstrat Typ C650 der Firma NGK mit einem Durchmesser von 14,3764 cm und einer Länge von 15,24 cm, mit 46,5 Zellen pro Quadratzentimetern und einer Wandstärke von 0,3048 mm wurde in einem ersten Schritt mit einer SCR-katalytisch aktiven Beschichtung versehen. Hierzu wurde zunächst ein mit 3 Gew.-% Eisen ausgetauschter Zeolith beta in Wasser suspendiert, die daraus erhaltene Suspension wurde unter Zuhilfenahme einer Dyno-Mühle gemahlen, bis die Partikelgrößenverteilung einen d₁₀₀-Wert zeigte, der kleiner als 7 µm war. Die Suspension wurde nach Einstellung eines geeigneten Feststoffgehaltes von etwa 30 % durch Einpumpen in die Anströmkanäle und anschließendes Absaugen in die Wände der oben genannten Wandflußfiltersubstrate eingebracht. Das Filter wurde anschließend eine Stunde lang bei 120°C im Wirbelbett getrocknet und für die Dauer von 30 Minuten bei 350°C in einem Heizgebläse kalziniert. Die aufgebrachte Menge der SCR-katalytisch aktiven Beschichtung betrug im fertigen Dieselpartikelfilter etwa 100 g/L, bezogen auf das Volumen des Bauteils.

In einem zweiten Beschichtungsschritt wurde das so erhaltene reduktionskatalytisch aktive Dieselpartikelfilter mit einem die Tiefenfiltration vermindernden, oxidischen Overcoat versehen.

Zur Herstellung einer geeigneten Beschichtungssuspension für den Overcoat wurde eine geeignete Menge von mit 3 Gew.-% Lanthansesquioxid stabilisiertem Alminiumoxid unter Rühren in einer Menge Wasser suspendiert, die etwa der zweieinhalbfachen Wasseraufnahme des eingesetzen Oxids entsprach. Die so erhaltene Suspension wurde unter Zuhilfenahme einer Dyno-Mühle gemahlen, bis die Partikelgrößenverteilung einen der Porengrößenverteilung des eingesetzten Substrates entsprechend angepassten d₅₀-Wert von 7,36 µm und einen d₉₀-Wert von 17,82 µm aufwies.

Die Suspension wurde nach Einstellen eines geeigneten Feststoffgehaltes von ca. 4 % Feststoff auf das bereits SCR-katalytisch beschichtete Dieselpartikelfilter durch Einpumpen der Beschichtungssuspension in die Anströmkanäle und anschließendes Absaugen aufgebracht. Das Filter wurde anschließend zwei Stunden lang bei 120°C im Heizgebläse getrocknet, und nach einer halbstündigen Wärmebehandlung im Heizgebläse bei 350°C für die Dauer von zwei Stunden bei 500°C in einem Stationärofen kalziniert. Die dem Overcoat zuzuordnende Beladungsmenge im fertigen reduktionskatalytisch aktive beschichteten Dieselpartikelfilter betrug 10 g/L bezogen auf das Volumen des Bauteils.

## Patentansprüche

1. Dieselpartikelfilter enthaltend ein keramisches Wandflussfiltersubstrat und eine erste, in den Anströmkanälen (1) aufgebrachte Beschichtung aus hochschmelzendem Material, die so beschaffen ist, dass sie die die Anströmkanäle (1) und Abströmkanäle (2) verbindenden Poren in der Wand (4) anströmseitig für Russpartikel verschließt, ohne dabei den Durchtritt der gasförmigen Abgasbestandteile zu verhindern, wobei in die Wand (4) zwischen Anströmkanälen (1) und Abströmkanälen (2) eine zweite Beschichtung eingebracht ist, welche so beschaffen ist, dass sie die selektive Reduktion von Stickoxiden mit einem Reduktionsmittel wirksam katalysiert, **dadurch gekennzeichnet, dass** die erste Beschichtung mehrheitlich ein oder mehrere hochschmelzende Oxide enthält, deren Partikelgrößen den Porengrößen in der Wand des Wandflussfiltersubstrates derart angepasst wird, dass der d₅₀-Wert der Partikelgrößenverteilung der Oxide gleich oder größer dem d₅-Wert der Porengrößenverteilung des Wandflussfiltersubstrates ist, wobei zugleich der d₉₀-Wert der Partikelgrößenverteilung der Oxide gleich oder größer dem d₉₅-Wert der Porengrößenverteilung des Wandflussfiltersubstrates ist,
wobei unter dem d₅₀-Wert bzw. dem d₉₀-Wert der Partikelgrößenverteilung der Oxide zu verstehen ist, dass 50 % bzw. 90 % des Gesamtvolumens der Oxide nur solche Partikel enthält, deren Durchmesser kleiner oder gleich dem als d₅₀ bzw. d₉₀ angegebenen Wert ist,
und wobei unter d₅-Wert bzw. dem d₉₅-Wert der Porengrößenverteilung des Wandflussfiltersubstrates zu verstehen ist, dass 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist.

2. Dieselpartikelfilter nach Anspruch 1, **dadurch gekennzeichnet, dass** die Materialien, die in der ersten Beschichtung eingesetzt werden, keine oxidationskatalytisch aktive Wirkung gegenüber Ammoniak aufweisen.

3. Dieselpartikelfilter nach Anspruch 1 oder 2, **dadurch gekennzeichnet, dass** die zweite Beschichtung eine oder mehrere SCR-katalytisch aktive Komponenten enthält, welche ausgewählt sind aus der Gruppe bestehend aus:
(a) mit Eisen und/oder Kupfer ausgetauschte Zeolithverbindungen ausgewählt aus MOR, USY, ZSM-5, ZSM-20, beta-Zeolith, CHA, FER oder Mischungen davon; oder
(b) mit Eisen und/oder Kupfer ausgetauschte zeolithähnliche Verbindungen ausgewählt aus SAPO-34 oder ALPO-34 oder Mischungen davon; oder
(c) Vanadiumoxid, Titanoxid, Wolframoxid, Molybdänoxid, Ceroxid, Zirkonoxid, Nioboxid, Eisenoxid, Manganoxid oder Mischungen oder Mischoxide davon; oder
(d) Mischungen aus (a) und/oder (b) und/oder (c).

4. Dieselpartikelfilter nach Anspruch 1, **dadurch gekennzeichnet, dass** die Oxide in der ersten Beschichtung eine Partikelgrößenverteilung aufweisen mit einen d₅₀-Wert größer oder gleich 5 µm bei einem d₉₀-Wert größer oder gleich 20 µm.

5. Dieselpartikelfilter nach Anspruch 4, **dadurch gekennzeichnet, dass** die Oxide in der ersten Beschichtung ausgewählt sind aus der Gruppe bestehend aus Aluminiumoxid, Selten-Erdmetall-stabilisiertes Aluminiumoxid, Selten-Erdmetall-Sesquioxid und Mischungen davon.

6. Dieselpartikelfilter nach Anspruch 5, **dadurch gekennzeichnet, dass** die erste Beschichtung eine Schichtdicke von 10 bis 150 µm aufweist.

7. Dieselpartikelfilter nach einem der Ansprüche 1 bis 3, **dadurch gekennzeichnet, dass** die erste Beschichtung mehrheitlich ein hochschmelzendes Fasermaterial enthält, wobei die mittlere Länge der Fasern zwischen 50 und 250 µm beträgt und der mittlere massenbezogene Durchmesser der Fasern gleich oder kleiner dem d₅₀-Wert der Porengrößenverteilung des Wandflussfiltersubstrates ist, wobei unter d₅₀-Wert der Porengrößenverteilung des Wandflussfiltersubstrates zu verstehen ist, dass 50 % des gesamten, durch Quecksilberporosimetrie bestimmbaren Porenvolumens gebildet werden durch Poren, deren Durchmesser kleiner oder gleich dem als d₅₀ angegebenen Wert ist.

8. Dieselpartikelfilter nach Anspruch 7, **dadurch gekennzeichnet, dass** das Fasermaterial ausgewählt ist aus der Gruppe der bestehend aus Steinwolle, Natursteinfaser und Mineralwolle mit Faserdurchmessern größer 5 µm.

9. Dieselpartikelfilter nach Anspruch 8, **dadurch gekennzeichnet, dass** die Beschichtung eine Schichtdicke von 1 bis 50 µm aufweist.

10. Dieselpartikelfilter nach einem der vorstehenden Ansprüche, **dadurch gekennzeichnet, dass** das Wandflußfiltersubstrat aus Siliciumcarbid, Cordierit oder Aluminiumtitanat gefertigt ist und die in den Wänden zwischen An- und Abströmkanälen enthaltenen Poren einen mittleren Durchmesser zwischen 5 und 50 µm aufweisen.

11. Dieselpartikelfilter nach einem der vorstehenden Ansprüche, **dadurch gekennzeichnet, dass** der ersten Beschichtung, die mehrheitlich ein oder mehrere hochschmelzende Oxide enthält, durch Beimischung oder Imprägnierung Palladium als oxidationskatalytisch aktive Komponente beigefügt ist.

12. Verwendung eines Dieselpartikelfilters nach einem der Ansprüche 1 bis 11 zur Verminderung von Stickoxiden und Partikeln aus dem Abgas von Dieselmotoren.

13. Verwendung eines Dieselpartikelfilters nach Anspruch 11 zur Reinigung der Abgase von Dieselmotoren.

## Claims

1. Diesel particulate filter containing a ceramic wall flow filter substrate and a first coating applied in the inflow channel (1) of refractory material, with the coating being such that it closes the pores in the wall (4) of the inflow channels (1) and the outflow channels (2) on the inflow side for soot particles without thereby impeding the passage of the gaseous exhaust components, wherein a second coating is introduced into the wall (4) between the inflow channels (1) and outflow channels (2) such that it effectively catalyzes the selective reduction of nitrogen oxides with a reducing agent, **characterized in that** the first coating contains mainly one or more refractory oxides whose particle size is adapted to the pore sizes in the wall of the wall flow filter substrate in such a way that the d₅₀ value of the particle size distribution of the oxides is equal to or greater than the d₅ value of the pore size distribution of the wall flow filter substrate,
wherein, simultaneously, the d₉₀ value of the particle size distribution of the oxides is equal to or greater than the d₉₅ value of the pore size distribution of the wall flow filter substrate,
wherein, the d₅₀ value or the d₉₀ value of the particle size distribution of the oxides is understood in such a way that 50% or 90% of the total volume of the oxides contains only particles whose diameters are less than or equal to the given d₅₀ or d₉₀ value, and
wherein the d₅ value or the d₉₅ value of the particle size distribution of the oxides is understood in such a way that 5% or 95% of the total volume of the pores determinable by mercury porosimetry are formed by pores whose diameters are less than or equal to the given d₅ or d₉₅ value.

2. Diesel particulate filter according to claim 1, **characterized in that** the materials that are used in the first coating do not have any oxidation catalytic active effect on ammonia.

3. Diesel particulate filter according to claim 1 or 2,
**characterized in that** the second coating contains one or more SCR-catalytically active components that are selected from the group consisting of:
(a) zeolite compounds exchanged with iron and/or copper, selected from MOR, USY, ZSM-5, ZSM-20, beta-zeolite, CHA, FER, or mixtures thereof; or
(b) zeolite-like compounds exchanged with iron and/or copper, selected from SAPO-34 or ALPO-34 or mixtures thereof; or
(c) vanadium oxide, titanium oxide, tungsten oxide, molybdenum oxide, ceroxide, zirconium oxide, niobium oxide, ferric oxide, manganese oxide, or mixtures of mixed oxides thereof; or
(d) mixtures of (a) and/or (b) and/or (c).

4. Diesel particulate filter according to claim 1, **characterized in that** the oxides in the first coating have a particle size distribution with a d₅₀ value that is greater than or equal to 5 µm for a d₉₀ value that is greater than or equal to 20 µm.

5. Diesel particulate filter according to claim 4, **characterized in that** the oxides in the first coating have been selected from the group consisting of aluminum oxide, aluminum oxide stabilized with rare earth metals, sesquioxide with rare earth metals, and mixtures thereof.

6. Diesel particulate filter according to claim 5, **characterized in that** the first coating has a layer thickness of from 10 to 150 µm.

7. Diesel particulate filter according to one of claims 1 through 3, **characterized in that** the first coating contains mainly refractory fiber material, wherein the average length of the fibers is between 50 and 250 µm, and the average mass-related diameter of the fibers is equal to or less than the d₅₀ value of the pore size distribution of the wall flow filter substrate, wherein the d₅₀ value of the pore size distribution of the wall flow filter substrate is understood in such a way that 50% of the total pore volume determinable by mercury porosimetry is formed by pores whose diameters are less than or equal to the given d₅₀ value.

8. Diesel particulate filter according to claim 7, **characterized in that** the fiber material has been selected from the group consisting of rock wool, natural stone fiber, and mineral wool with fiber diameters greater than 5 µm.

9. Diesel particulate filter according to claim 8, **characterized in that** the coating has a layer thickness of from 1 to 50 µm.

10. Diesel particulate filter according to one of the preceding claims, **characterized in that** the wall flow filter substrate is made of silicon carbide, cordierite, or aluminum titanate, and the pores contained in the walls between inflow and outflow channels have an average diameter between 5 and 50 µm.

11. Diesel particulate filter according to one of the preceding claims, **characterized in that** palladium has been added by admixture or impregnation as an oxidation catalytic active component to the first coating, which contains mainly one or more refractory oxides.

12. Use of a diesel particulate filter according to one of claims 1 through 11 for reducing nitrogen oxides and particles from the exhaust gases of diesel engines.

13. Use of a diesel particulate filter according to claim 11 for cleaning the exhaust gases of diesel engines.

## Revendications

1. Filtre à particules diesel, contenant un substrat céramique de filtre à parois filtrantes et un premier revêtement, appliqué dans les conduits d'admission (1), en matériau à point de fusion élevé, qui est conçu de manière telle qu'il ferme, côté admission, les pores reliant les conduits d'admission (1) et les conduits d'évacuation (2) dans la paroi par rapport aux particules de suie, sans empêcher le passage des constituants gazeux des gaz d'échappement, un deuxième revêtement étant introduit dans la paroi (4) entre les conduits d'admission (1) et les conduits d'évacuation (2), qui est conçu de manière à catalyser efficacement la réduction sélective d'oxydes d'azote à l'aide d'un agent de réduction, **caractérisé en ce que** le premier revêtement contient majoritairement un ou plusieurs oxydes à point de fusion élevé, dont les tailles de particule sont adaptées aux tailles des pores dans la paroi du substrat de filtre à parois filtrantes, de manière telle que la valeur d₅₀ de la répartition des tailles de particule des oxydes soit identique ou supérieure à la valeur d₅ de la répartition des tailles de pore du substrat de filtre à parois filtrantes,
la valeur d₉₀ de la répartition des tailles de particule des oxydes étant simultanément identique ou supérieure à la valeur d₉₅ de la répartition des tailles de pore du substrat de filtre à parois filtrantes,
la valeur d₅₀ ou, selon le cas, la valeur d₉₀ de la répartition des tailles de particule des oxydes signifiant que respectivement 50 % ou 90 % du volume total des oxydes ne contiennent que des particules dont le diamètre est inférieur ou identique à la valeur indiquée respectivement comme d₅₀ ou d₉₀,
et la valeur d₅ ou, selon le cas, la valeur d₉₅ de la répartition des tailles de pore du substrat de filtre à parois filtrantes signifiant que respectivement 5 % ou 95 % du volume total des pores, pouvant être déterminé par porosimétrie au mercure, sont formés par des pores dont le diamètre est inférieur ou identique à la valeur indiquée respectivement comme d₅ ou d₉₅.

2. Filtre à particules diesel selon la revendication 1, **caractérisé en ce que** les matériaux qui sont utilisés dans le premier revêtement ne présentent pas d'effet catalytiquement actif par oxydation par rapport à l'ammoniac.

3. Filtre à particules diesel selon la revendication 1 ou 2, **caractérisé en ce que** le deuxième revêtement contient un ou plusieurs composants catalytiquement actifs par RCS, qui sont choisis dans le groupe constitué par :
(a) les composés zéolithiques échangés avec du fer et/ou du cuivre, choisis parmi MOR, USY, ZSM-5, ZSM-20, la zéolithe bêta, CHA, FER ou leurs mélanges ; ou
(b) les composés analogues à des zéolithes échangés avec du fer et/ou du cuivre, choisis parmi SAPO-34 ou ALPO-34 ou leurs mélanges ; ou
(c) l'oxyde de vanadium, l'oxyde de titane, l'oxyde de tungstène, l'oxyde de molybdène, l'oxyde de cérium, l'oxyde de zirconium, l'oxyde de niobium, l'oxyde de fer, l'oxyde de manganèse ou leurs mélanges ou leurs oxydes mixtes ; ou
(d) les mélanges de (a) et/ou (b) et/ou (c).

4. Filtre à particules diesel selon la revendication 1, **caractérisé en ce que** les oxydes, dans le premier revêtement, présentent une répartition des tailles de particule présentant une valeur d₅₀ supérieure ou identique à 5 µm, à une valeur d₉₀ supérieure ou identique à 20 µm.

5. Filtre à particules diesel selon la revendication 4, **caractérisé en ce que** les oxydes dans le premier revêtement sont choisis dans le groupe constitué par l'oxyde d'aluminium, l'oxyde d'aluminium stabilisé par des métaux des terres rares, le sesquioxyde de métaux de terres rares et leurs mélanges.

6. Filtre à particules diesel selon la revendication 5, **caractérisé en ce que** le premier revêtement présente une épaisseur de couche de 10 à 150 µm.

7. Filtre à particules diesel selon l'une quelconque des revendications 1 à 3, **caractérisé en ce que** le premier revêtement contient majoritairement un matériau fibreux à point de fusion élevé, la longueur moyenne des fibres étant située entre 50 et 250 µm et le diamètre moyen par rapport à la masse des fibres étant identique ou inférieur à la valeur d₅₀ de la répartition des tailles de pore du substrat de filtre à parois filtrantes, la valeur d₅₀ de la répartition des tailles de pore du substrat de filtre à parois filtrantes signifiant que 50 % du volume total des pores, pouvant être déterminé par porosimétrie au mercure, sont formés par des pores dont le diamètre est inférieur ou identique à la valeur indiquée comme d₅₀.

8. Filtre à particules diesel selon la revendication 7, **caractérisé en ce que** le matériau fibreux est choisi dans le groupe constitué par la laine de roche, les fibres de pierre naturelle et la laine minérale, présentant des diamètres de fibres supérieurs à 5 µm.

9. Filtre à particules diesel selon la revendication 8, **caractérisé en ce que** le revêtement présente une épaisseur de couche de 1 à 50 µm.

10. Filtre à particules diesel selon l'une quelconque des revendications précédentes, **caractérisé en ce que** le substrat de filtre à parois filtrantes est réalisé en carbure de silicium, en cordiérite ou en titanate d'aluminium et les pores contenus dans les parois entre les conduits d'admission et les conduits d'évacuation présentent un diamètre moyen entre 5 et 50 µm.

11. Filtre à particules diesel selon l'une quelconque des revendications précédentes, **caractérisé en ce que** le premier revêtement, qui contient majoritairement un ou plusieurs oxydes à point de fusion élevé, est additionné, par mélange ou imprégnation, de palladium comme composant catalytiquement actif par oxydation.

12. Utilisation d'un filtre à particules diesel selon l'une quelconque des revendications 1 à 11 pour la diminution d'oxydes d'azote et de particules provenant des gaz d'échappement de moteurs diesel.

13. Utilisation d'un filtre à particules diesel selon la revendication 11 pour l'épuration des gaz d'échappement de moteurs diesel.
